# EUROPÄISCHE PATENTSCHRIFT

(11) **EP 4 166 272 B1**
(45) Veröffentlichungstag und Bekanntmachung des Hinweises auf die Patenterteilung: **04.03.2026**
(21) Anmeldenummer: 22195753.3
(22) Anmeldetag: 15.09.2022
(51) Int. Cl.: B23P 19/04, B23P 21/00, B23K 37/04, B23K 101/00

(54) **MODULAR AUFGEBAUTE ARBEITSSTATION**
MODULAR WORK STATION
POSTE DE TRAVAIL DE CONSTRUCTION MODULAIRE

(30) Priorität: 12.10.2021 DE 102021126366
(43) Veröffentlichungstag der Anmeldung: 19.04.2023
(73) Patentinhaber: Purem GmbH, 66539 Neunkirchen (DE)
(72) Erfinder: Borm, Sascha, Ottweiler (DE); Klee, Andreas, Namborn (DE)
(74) Vertreter: Ruttensperger Lachnit Trossin Gomoll

(56) Entgegenhaltungen:
- EP-A1- 2 347 854
- DE-A1- 102005 047 250
- DE-A1- 102007 045 039
- DE-A1- 102014 015 053
- DE-U1- 202004 018 795
- DE-U1- 202013 003 528
- US-A- 2 320 079

## Beschreibung

Die vorliegende Erfindung betrifft eine modular aufgebaute Arbeitsstation.

Für den Zusammenbau von Abgasanlagen oder Komponenten von Abgasanlagen für Brennkraftmaschinen von Kraftfahrzeugen werden durch Verschweißen miteinander zu verbindende Komponenten über diese tragende Werkstückträger an in zumindest einem Bewegungsmodus, beispielsweise einem Dreh-Bewegungsmodus, bewegbaren Arbeitsträgern von Arbeitsstationen festgelegt und durch Bewegung eines jeweiligen Arbeitsträgers derart positioniert, dass beispielsweise für einen Schweißroboter Zugriff auf zu verschweißende Bereiche besteht.

Aus der DE 10 2007 045 039 A1 ist eine modular aufgebaute Arbeitsstation gemäß dem Oberbegriff des Anspruchs 1 bekannt. Bei dieser Arbeitsstation sind an einem kastenartigen Arbeitsmodulträger mehrere Arbeitsmodule nebeneinander festgelegt. Jedes Arbeitsmodul umfasst einen Arbeitsträger zur Aufnahme eines Werkstücks. Der Arbeitsträger ist durch einen diesem zugeordneten Drehantrieb um eine Drehachse drehbar. Der Arbeitsträger und der Drehantrieb bilden eine Drehbaugruppe. Zum Verschwenken des Arbeitsträgers um eine zur Drehachse im Wesentlichen orthogonal Schwenkachse ist der Arbeitsmodulträger zusammen mit den daran getragenen Arbeitsmodulen mit bezüglich einer Schwenkachse entgegengesetzten axialen Endbereichen desselben zwischen zwei Haltern positioniert und durch einen Schwenkantrieb zur Verschwenkbewegung um die Schwenkachse antreibbar.

Es ist die Aufgabe der vorliegenden Erfindung, eine Arbeitsstation, insbesondere zur Durchführung von Schweißvorgängen beim Zusammenbau von Abgasanlagen oder Komponenten von Abgasanlagen für Brennkraftmaschinen von Kraftfahrzeugen, mit erweiterten Einsatzmöglichkeiten bereitzustellen.

Erfindungsgemäß wird diese Aufgabe gelöst durch eine modular aufgebaute Arbeitsstation gemäß Anspruch 1.

Durch die modulare Ausgestaltung der Arbeitsstation, bei welcher der zur Erzeugung einer Bewegung eines Arbeitsträgers erforderliche Antriebsträgerantrieb in ein jeweiliges Arbeitsmodul integriert ist, besteht die Möglichkeit, in einfacher Art und Weise verschiedene für unterschiedliche Arbeitsvorgänge besonders geeignete Arbeitsmodule an dem Arbeitsmodulträger festzulegen, ohne dass es erforderlich ist, Antriebskomponenten miteinander zu koppeln oder beim Abbau eines Arbeitsmoduls von dem Arbeitsmodulträger voneinander zu entkoppeln. Die Arbeitsstation kann somit schnell für verschiedenste Arbeitsvorgänge konditioniert werden.

Um mit der erfindungsgemäß aufgebauten Arbeitsstation gleichzeitig verschiedene Arbeitsvorgänge durchführen zu können, wird vorgeschlagen, dass an dem Arbeitsmodulträger wenigstens zwei Arbeitsmodulträger-Befestigungsbereiche zur Festlegung jeweils eines Arbeitsmoduls vorgesehen sind.

Um dabei ein gegenseitiges Stören bei der gleichzeitigen Durchführung verschiedener bzw. mehrerer Arbeitsvorgänge zu vermeiden, ist es vorteilhaft, wenn wenigstens zwei Arbeitsmodulträger-Befestigungsbereiche an zueinander entgegengesetzten Seiten des Arbeitsmodulträgers vorgesehen sind. Für eine variable Anbindung von Arbeitsmodulen an den Arbeitsmodulträger wird vorgeschlagen, dass wenigstens zwei Arbeitsmodulträger-Befestigungsbereiche zueinander im Wesentlichen identisch sind.

Wenigstens eines der Arbeitsmodule kann ein Einachs-Arbeitsmodul sein, wobei der Arbeitsträger des Einachs-Arbeitsmoduls um eine Drehachse drehbar ist und der Arbeitsträgerantrieb des Einachs-Arbeitsmoduls einen Drehantrieb zum Antreiben des Arbeitsträgers zur Drehung um die Drehachse umfasst.

Dabei kann für einen einfach zu realisierenden Aufbau der Drehantrieb einen vorzugsweise elektrisch betreibbaren Drehantriebsmotor umfassen.

Wenigstens eines der Arbeitsmodule ist ein Zweiachs-Arbeitsmodul, wobei der Arbeitsträger des Zweiachs-Arbeitsmoduls um eine Drehachse drehbar ist und um eine Schwenkachse schwenkbar ist, und wobei der Arbeitsträgerantrieb des Zweiachs-Arbeitsmoduls einen Drehantrieb zum Antreiben des Arbeitsträgers zur Drehung um die Drehachse umfasst und einen Schwenkantrieb zum Antreiben des Arbeitsträgers zum Schwenken um die Schwenkachse umfasst.

Auch dabei kann für einen einfach zu realisierenden Aufbau der Drehantrieb einen vorzugsweise elektrisch betreibbaren Drehantriebsmotor umfassen, oder/und kann der Schwenkantrieb einen vorzugsweise elektrisch betreibbaren Schwenkantriebsmotor umfassen.

Für eine definierte Durchführbarkeit von Bewegungsvorgängen wird vorgeschlagen, dass die Schwenkachse zur Drehachse nicht parallel ist, oder/und dass die Schwenkachse die Drehachse schneidet, vorzugsweise unter einem Winkel von etwa 90°.

Das Zweichs-Arbeitsmodul umfasst:
- eine Dreh-Baugruppe, wobei die Dreh-Baugruppe den Drehantrieb und den Arbeitsträger umfasst,
- eine Schwenk-Baugruppe, wobei die Schwenk-Baugruppe den Arbeitsmodul-Befestigungsbereich und den Schwenkantrieb umfasst.

Dabei ist die Dreh-Baugruppe an der Schwenk-Baugruppe durch den Schwenkantrieb zum Schwenken um die Schwenkachse schwenkbar getragen.

Um verschiedene Arbeitsmodule beliebig an verschiedenen Arbeitsmodulträger-Befestigungsbereichen anbringen zu können, können alle Arbeitsmodule zueinander im Wesentlichen identische Arbeitsmodul-Befestigungsbereiche aufweisen.

Für eine stabile Positionierung von an der erfindungsgemäßen Arbeitsstation zu bearbeitenden Werkstücken während eines durchzuführenden Arbeitsvorgangs ist es vorteilhaft, wenn in Zuordnung zu wenigstens einem Arbeitsmodulträger-Befestigungsbereich eine Gegenlagereinheit vorgesehen ist. Dabei kann die Gegenlagereinheit einen um eine Gegenlager-Drehachse drehbaren Gegenlagerträger aufweisen, wobei die Gegenlager-Drehachse der wenigstens einen Gegenlagereinheit bei an dem dieser zugeordneten Arbeitsmodulträger-Befestigungsbereich festgelegtem Arbeitsmodul im Wesentlichen der Drehachse dieses Arbeitsmoduls entspricht.

Eine weiter erhöhte Variabilität im Einsatz der erfindungsgemäßen Arbeitsstation kann dadurch erreicht werden, dass wenigstens eine in Zuordnung zu einem Arbeitsmodulträger-Befestigungsbereich vorgesehene Gegenlagereinheit vorzugsweise in Richtung einer Gegenlager-Drehachse bezüglich des zugeordneten Arbeitsmodulträger-Befestigungsbereichs bewegbar ist.

Zur Anbringung eines oder mehrerer Werkstücke an einem Arbeitsträger kann wenigstens eine Werkstückträgerbaugruppe vorgesehen sein, wobei die wenigstens eine Werkstückträgerbaugruppe einen ersten Befestigungsbereich zur Halterung an einem Arbeitsträger und einen Werkstückaufnahmebereich zur Aufnahme wenigstens eines Werkstücks umfasst.

Dabei kann eine stabile Halterung dadurch unterstützt werden, dass wenigstens eine Werkstückträgerbaugruppe einen zweiten Befestigungsbereich zur Halterung an einer Gegenlagereinheit umfasst.

Um eine Werkstückträgerbaugruppe in Verbindung mit Arbeitsmodulen verschiedener Bauart einsetzen zu können, wird vorgeschlagen, dass wenigstens eine einen ersten Befestigungsbereich und einen zweiten Befestigungsbereich umfassende Werkstückträgerbaugruppe einen den ersten Befestigungsbereich aufweisenden ersten Baugruppenteil und einen mit dem ersten Baugruppenteil lösbar zu verbindenden und den zweiten Befestigungsbereich bereitstellenden zweiten Baugruppenteil umfasst.

Die vorliegende Erfindung wird nachfolgend mit Bezug auf die beiliegenden Figuren detailliert beschrieben. Es zeigt:
- Fig. 1: eine modular aufgebaute Arbeitsstation in perspektivischer Ansicht;
- Fig. 2: einen Arbeitsmodulträger der Arbeitsstation der Fig. 1 mit zwei daran festgelegten Arbeitsmodulen;
- Fig. 3: eine Draufsicht auf den Arbeitsmodulträger der Fig. 2;
- Fig. 4: eine perspektivische Ansicht des Arbeitsmodulträgers der Arbeitsstation der Fig. 1;
- Fig. 5: eine Seitenansicht des Arbeitsmodulträgers der Fig. 4;
- Fig. 6: eine perspektivische Ansicht eines Einachs-Arbeitsmoduls der Arbeitsstation der Fig. 1;
- Fig. 7: eine perspektivische Ansicht eines Zweiachs-Arbeitsmoduls der Fig. 1;
- Fig. 8: eine prinzipartige Darstellung der Arbeitsstation der Fig. 1 in einem anderen Anwendungsbeispiel.

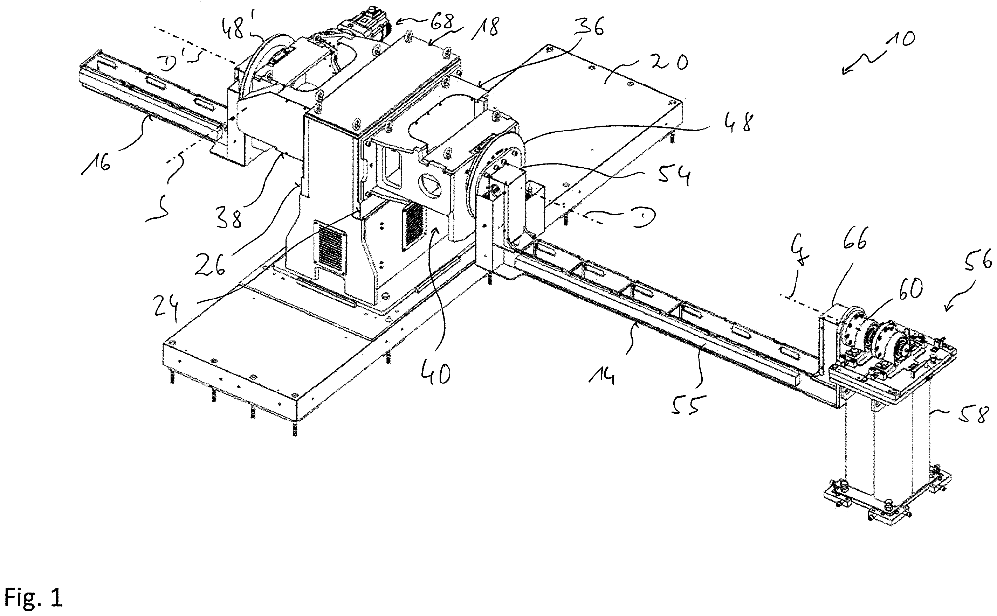

In Fig. 1 ist eine modular aufgebaute Arbeitsstation allgemein mit 10 bezeichnet. Diese Arbeitsstation 10 kann beispielsweise dazu genutzt werden, Abgasanlagen oder Komponenten für Abgasanlagen von Brennkraftmaschinen für Kraftfahrzeuge zu verschweißen. Hierzu können derartige Komponenten auf Werkzeugträgerbaugruppen 14 bzw. 16 positioniert werden. Die Werkzeugträgerbaugruppen 14, 16 können dann in der Arbeitsstation 10 in nachfolgend beschriebener Art und Weise in für die Durchführung von Schweißvorgängen vermittels in Fig. 1 nicht dargestellter Schweißroboter geeignete Positionen bewegt werden.

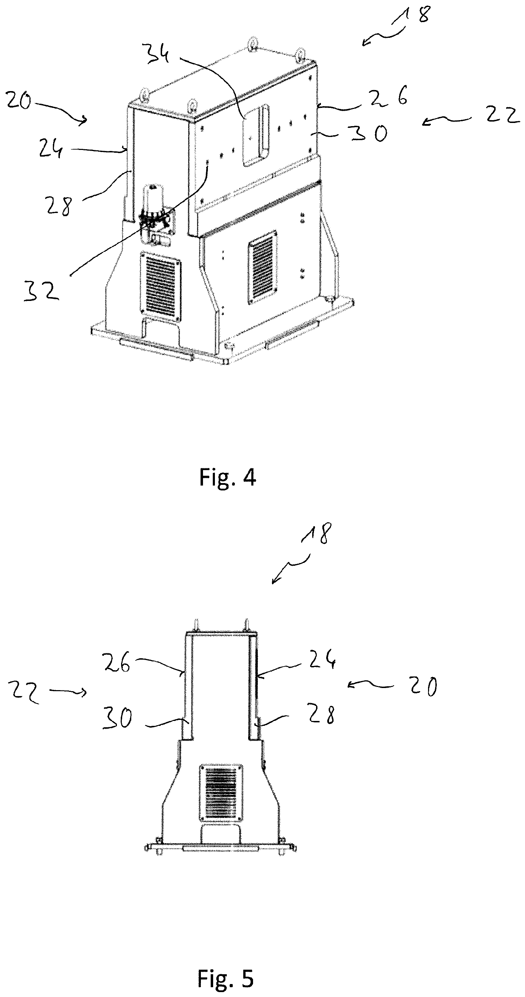

Die modular aufgebaute Arbeitsstation 10 umfasst einen kastenartig ausgebildeten Arbeitsmodulträger 18, der auf einem hierfür geeigneten Untergrund 20 beispielsweise durch Verschraubung feststehend positioniert wird. Der Arbeitsmodulträger 18 ist in den Fig. 4 und 5 dargestellt und weist an zwei voneinander weg orientierten Seiten 20, 22 desselben jeweils einen Arbeitsmodulträger-Befestigungsbereich 24, 26 auf. Die Arbeitsmodulträger-Befestigungsbereiche 24, 26 können beispielsweise jeweils eine Trägerplatte 28, 30 aufweisen, in welchen eine Mehrzahl von Innengewindeöffnungen 32 vorgesehen ist. Über Durchführöffnungen 34 in den Trägerplatten 28, 30 können Versorgungsleitungen für am Arbeitsmodulträger 18 bzw. den Arbeitsmodulträger-Befestigungsbereichen 24, 26 desselben lösbar festzulegende Arbeitsmodule 36, 38 hindurchgeführt werden.

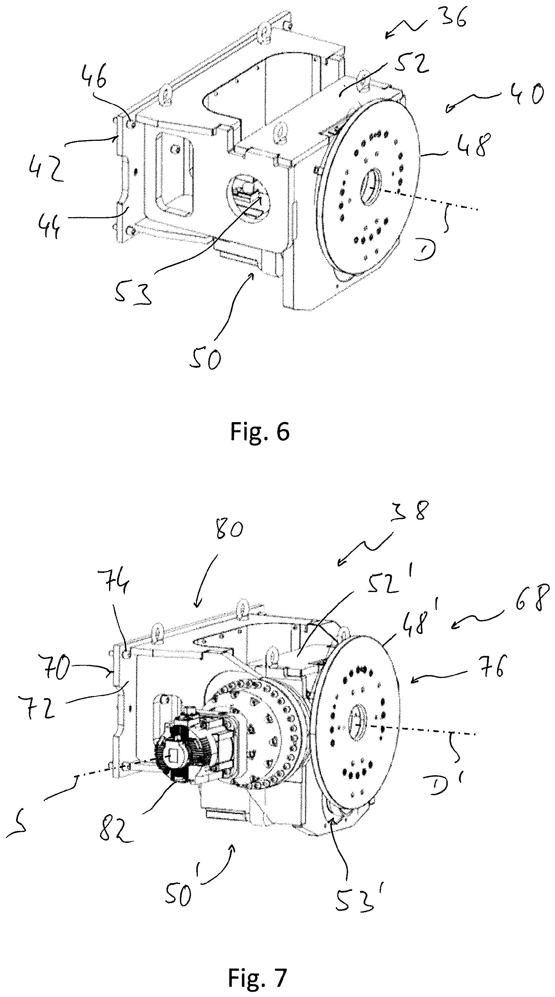

Das als Einachs-Arbeitsmodul 40 ausgebildete Arbeitsmodul 36 ist in Fig. 6 deutlicher dargestellt. Das Einachs-Arbeitsmodul 40 umfasst einen Arbeitsmodul-Befestigungsbereich 42, mit welchem dieses an jedem der beiden zueinander im Wesentlichen identisch gestalteten Arbeitsmodulträger-Befestigungsbereiche 24, 26 des Arbeitsmodulträgers 18 festgelegt werden kann. Der Arbeitsmodul-Befestigungsbereich 42 umfasst gleichermaßen eine Trägerplatte 44, durch welche hindurch Befestigungsschrauben 46 in die Innengewindeöffnungen 32 des zur Festlegung des Einachs-Arbeitsmoduls 40 ausgewählten Arbeitsmodulträger-Befestigungsbereichs 24, 26 geschraubt werden können. In dem in den Figuren dargestellten Beispiel ist das Einachs-Arbeitsmodul 40 am Arbeitsmodulträger-Befestigungsbereich 24 des Arbeitsmodulträgers 18 festgelegt.

Das als Einachs-Arbeitsmodul 40 ausgebildete Arbeitsmodul 36 umfasst ferner einen beispielsweise tellerartig oder scheibenartig ausgebildeten Arbeitsträger 48 und einen diesem zugeordneten Arbeitsträgerantrieb 50, welche in einem Antriebskasten 52 untergebracht ist. Der Arbeitsträgerantrieb 50 des Einachs-Arbeitsmoduls 40 umfasst einen Drehantrieb 53 mit einem elektrisch erregbaren Drehantriebsmotor, durch welchen der Arbeitsträger 48 zur Drehung um eine Drehachse D beispielsweise in einem unbegrenzten Winkelbereich antreibbar ist. Da der in dem Antriebskasten 52 aufgenommene Arbeitsträgerantrieb 50 am Einachs-Arbeitsmodul 40 ansonsten unbewegbar getragen ist, ist der Arbeitsträger 48 ausschließlich in einem Dreh-Bewegungsmodus bewegbar, also um die Drehachse D drehbar.

Bei mit einem ersten Befestigungsbereich 54 beispielsweise durch Verschraubung an dem Arbeitsträger 48 des Einachs-Arbeitsmoduls 40 festgelegter Werkstückträgerbaugruppe 14 kann bei Erregung des Drehantriebmotors der Werkstückträger 54 bzw. dessen Werkstückaufnahmebereich 55 um die Drehachse D gedreht werden, wodurch auch die an der Werkstückträgerbaugruppe 14 getragenen Werkstücke W um die Drehachse D gedreht bzw. bewegt werden und somit in einer für den Zugriff beispielsweise eines Schweißroboters geeigneten Stellung positioniert werden können.

Um dabei eine definierte Bewegung bzw. Positionierung der in Richtung der Drehachse D vergleichsweise lang gebauten Werkstückträgerbaugruppe 14 zu gewährleisten, ist in Zuordnung zu dem Arbeitsmodulträger-Befestigungsbereich 24 eine Gegenlagereinheit 56 vorgesehen. Diese umfasst eine auf einem Untergrund beispielsweise feststehend festgelegte Trägersäule 58, in deren oberem Bereich ein Gegenlagerträger 60 um eine Gegenlagerdrehachse G drehbar angeordnet ist. An dem Gegenlagerträger 60 ist die Werkstückträgerbaugruppe 14 mit einem zweiten Befestigungsbereich 62 derselben beispielsweise durch Verschraubung festgelegt. Die Gegenlager-Drehachse D entsprich tim Wesentlichen der Drehachse D, so dass, angetrieben durch den Arbeitsträgerantrieb 50, die Werkstückträgerbaugruppe 14 in ihren beiden Befestigungsbereichen 54, 66 um die Drehachse D bzw. die Gegenlager-Drehachse G gedreht bzw. bewegt werden kann.

Das in dem dargestellten Ausgestaltungsbeispiel einer modularen Arbeitsstation 10 an dem Arbeitsmodulträger-Befestigungsbereich 26 lösbar festgelegte Arbeitsmodul 38 ist ein Zweiachs-Arbeitsmodul 68 ausgebildet. Das Zweiachs-Arbeitsmodul 68 umfasst einen Arbeitsmodul-Befestigungsbereich 70, welcher im Wesentlichen identisch zum Arbeitsmodul-Befestigungsbereich 42 des Einachs-Arbeitsmoduls 40 aufgebaut ist und eine Trägerplatte 72 aufweist, mit welcher das Zweiachs-Arbeitsmodul 68 vermittels Befestigungsschrauben 74 an jedem der Arbeitsmodulträger-Befestigungsbereiche 24, 26 lösbar festgelegt werden kann.

Das Zweiachs-Arbeitsmodul 68 umfasst eine allgemein mit 76 bezeichnete Dreh-Baugruppe. Diese umfasst den in dem Antriebskasten 52' untergebrachten Drehantrieb 53' für den in dem Dreh-Bewegungsmodus um die Drehachse D drehbaren Arbeitsträger 48'.

Das Zweiachs-Arbeitsmodul 68 umfasst ferner eine Schwenk-Baugruppe 80. Die Schwenk-Baugruppe 80 umfasst den Arbeitsmodul-Befestigungsbereich 70 sowie einen daran getragenen, elektrisch erregbaren Schwenkantriebsmotor. Durch den im Wesentlichen einen Schwenkantrieb 82 bereitstellenden Schwenkantriebsmotor kann die Dreh-Baugruppe 76 in einem Schwenk-Bewegungsmodus zur Verschwenkung um eine Schwenkachse S angetrieben werden. Die Schwenkachse S und die Drehachse D' stehen zueinander vorzugsweise im Wesentlichen orthogonal und schneiden sich im dargestellten Ausgestaltungsbeispiel in einem Bereich, der in Richtung der Drehachse D' außerhalb der Werkzeugträgerbaugruppe 14 und somit auch außerhalb jedes an dieser getragenen Werkstücks liegt. Das Zweiachs-Arbeitsmodul 68 ist somit als Zwei-Achs-Wender ausgestaltet. Bei anderer baulicher Ausgestaltung könnten die Drehachse D' und die Schwenkachse S sich in dem axialen Bereich schneiden, in welchem in Richtung der Drehachse D' die Werkstückträgerbaugruppe 14 und somit ein oder mehrere am Werkstückaufnahmebereich 55 getragene Werkstücke W positioniert sind. In diesem Falle ist das Zweiachs-Arbeitsmodul 68 als Zwei-Achs-Orbitalwender ausgebildet.

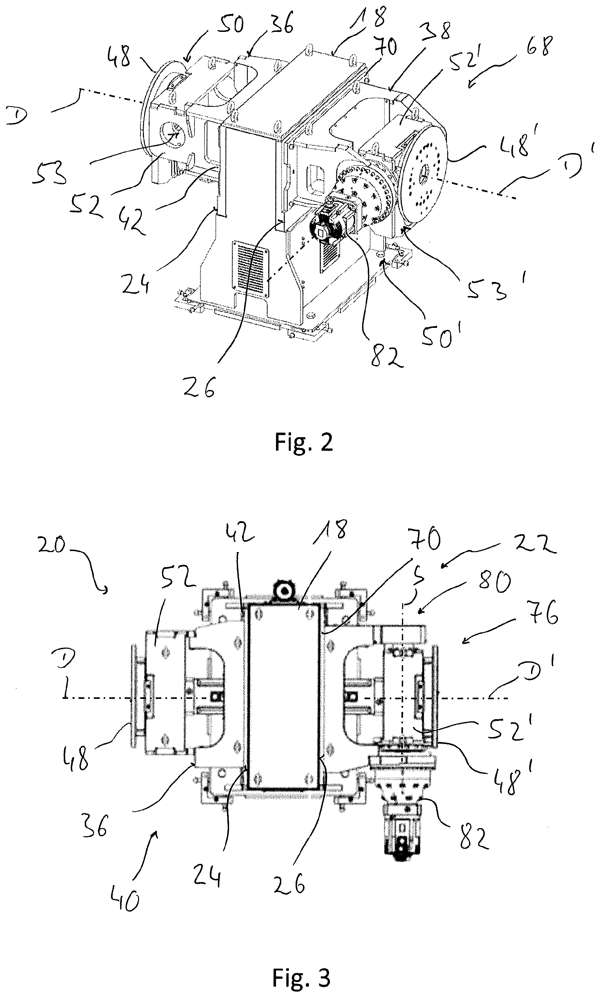

Bei Verschwenkung der Dreh-Baugruppe 76 um die Schwenkachse S ändert die Drehachse D' ihre Raumlage, wobei diese, beispielsweise ausgehend von der in den Fig. 1 und 2 dargestellten im Wesentlichen horizontalen Positionierung der Drehachse D', beispielsweise bezüglich der Horizontalen schräg angestellt orientiert werden kann oder bezüglich der Horizontalen im Wesentlichen auch unter einem Winkel von 90° positioniert werden kann. In dieser Positionierung der Drehachse D' kann dann die am Arbeitsträger 48' getragene Werkstückträgerbaugruppe 16 für einen geeigneten Zugriff, beispielsweise eines Schweißroboters, um die Drehachse D' gedreht werden. Bei Herbeiführung der dann erreichten Positionierung der Werkstückträgerbaugruppe 16 wirken der Drehantriebsmotor 53' der Dreh-Baugruppe 76 und der Schwenkantrieb 82 der Schwenk-Baugruppe 80 zusammen, welche in dieser Ausgestaltung des Zweiachs-Arbeitsmoduls 68 den Antriebsträgerantrieb 50' bereitstellen.

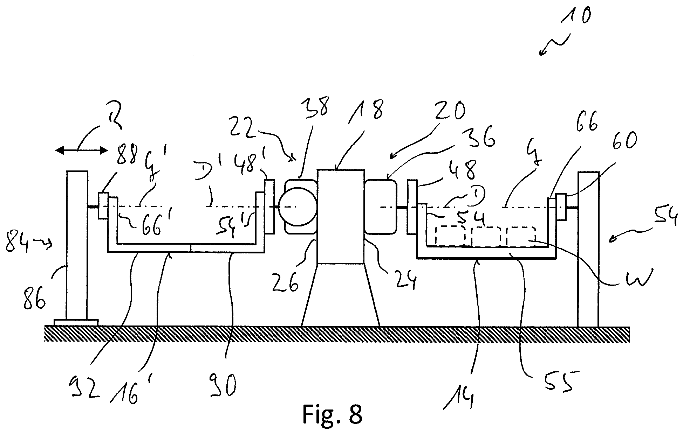

Bei der in Fig. 8 dargestellten erweiterten Ausgestaltung der modular aufgebauten Arbeitsstation 10 ist auch in Zuordnung zum Arbeitsmodulträger-Befestigungsbereich 26 eine Gegenlagereinheit 84 vorgesehen. Auch diese umfasst eine Trägersäule 86, an welcher ein Gegenlagerträger 88 um eine Gegenlager-Drehachse G' drehbar getragen ist. Die in Zuordnung zu dem Zweiachs-Arbeitsmodul 68 vorgesehene Werkstückträgerbaugruppe 16 umfasst in dieser Ausgestaltung einen am Arbeitsträger 48' beispielsweise durch Verschraubung festgelegten ersten Baugruppenteil 90 und einen am Gegenlagerträger 88 beispielsweise durch Verschraubung festgelegten zweiten Baugruppenteil 92. In ihrem Angrenzungsbereich 94 sind die beiden Baugruppenteile 90, 92 beispielsweise durch Verschraubung lösbar miteinander verbunden, so dass im dargestellten Ausgestaltungsbeispiel die Werkstückträgerbaugruppe 16 eine Struktur aufweist, welche im Wesentlichen der Struktur der Werkstückträgerbaugruppe 14 entspricht. Mit dem am ersten Baugruppenteil 90 vorgesehenen ersten Befestigungsbereich 54' ist die Werkstückträgerbaugruppe 16 am Arbeitsträger 48 festgelegt. Mit dem am zweiten Baugruppenteil 92 vorgesehenen zweiten Befestigungsbereich 66' ist die Werkstückträgerbaugruppe 16 am Gegenlagerträger 88 festgelegt.

Bei dieser Ausgestaltung der modular aufgebauten Arbeitsstation 10 kann das Zweiachs-Arbeitsmodul 68 grundsätzlich nur im Dreh-Betriebsmodus betrieben werden, in welchem die Werkstückträgerbaugruppe 16 zur Drehung um die Drehachse D' bzw. die Gegenlager-Drehachse G' angetrieben werden kann. Ein Verschwenken der Dreh-Baugruppe 76 um die Schwenkachse S ist ausgeschlossen.

Um bei dieser Ausgestaltung der Arbeitsstation 10 diese Verschwenkung zu ermöglichen, ist die Gegenlagereinheit 84 in einer Richtung R auf den Arbeitsmodulträger 18 zu bzw. von diesem weg bewegbar. Die Richtung R entspricht im Wesentlichen der Richtung der Drehachse D', wenn diese im Wesentlichen horizontal orientiert ist.

Ausgehend von dem in Fig. 8 dargestellten Zustand können die beiden Baugruppenteile 90, 92 in ihrem Angrenzungsbereich 94 voneinander gelöst werden, und der Baugruppenteil 92 kann dann zusammen mit der Gegenlagereinheit 84 in der Richtung R vom ersten Baugruppenteil 90 bzw. dem diesen tragenden Zweiachs-Arbeitsmodul 68 beispielsweise in einem Ausmaß von 0,2 bis 0,5 m weg bewegt werden. Der erste Baugruppenteil 90 der Werkstückträgerbaugruppe 16 kann dann, angetrieben durch den Schwenkantrieb 82, um die Schwenkachse S verschwenkt werden, um daran getragene Werkstücke in eine geeignete Positionierung zu bringen.

Aus der vorangehenden Beschreibung der modular aufgebauten Arbeitsstation 10 geht hervor, dass alle zum Bewegen der Arbeitsträger 48 bzw. 48' der Arbeitsmodule 36, 38 vorgesehenen Komponenten bzw. Systembereiche, also insbesondere der in einem jeweiligen Arbeitsmodul 36, 38 vorgesehene Arbeitsträgerantrieb 50, 50' Bestandteil eines jeweiligen Moduls bildet und nicht ganz oder teilweise in den Arbeitsmodulträger 18 integriert ist. Beim Anbringen eines jeweiligen Arbeitsmoduls 36, 38 an den Arbeitsmodulträger 18 müssen daher keine mechanischen Verbindungen hergestellt werden. Es ist lediglich erforderlich, die jeweiligen Arbeitsantriebe 50 bzw. 50' über entsprechende Leitungsverbindungen mit einem Steuergerät bzw. einer Energiequelle, also beispielsweise einem Spannungsnetz, zu verbinden, um die zum Betrieb der Arbeitsträgerantriebe 50, 50' erforderliche elektrische Energie zum jeweiligen Drehantriebsmotore bzw. zum Schwenkantriebsmotor zu leiten. Sofern erforderlich, kann auch zur Zufuhr von Betriebsmitteln, wie z. B. Öl bzw. Schmiermittel, eine Verbindungsleitung durch eine jeweilige Durchgriffsöffnung 34 hindurch an das an einen jeweiligen Arbeitsmodulträger-Befestigungsbereich 24, 26 anzubindende Arbeitsmodul 36 bzw. 38 angeschlossen werden.

Da bei dem Arbeitsmodulträger 18 die daran vorgesehenen Arbeitsmodulträger-Befestigungsbereiche 24, 26 zueinander im Wesentlichen identisch aufgebaut sind, kann jedes der mit gleichermaßen identischen Arbeitsmodul-Befestigungsbereichen 42, 70 aufgebauten Arbeitsmodule 36, 38 beliebig an jedem der Arbeitsmodulträger-Befestigungsbereiche 24, 26 durch Verschraubung festgelegt und auch davon wieder entfernt werden. Dies ermöglicht es, an der modular aufgebauten Arbeitsstation 10 in Zuordnung zu jedem Arbeitsmodulträger-Befestigungsbereich 24,26 einen Arbeitsvorgang unter Einsatz eines hierfür jeweils besonders geeigneten Arbeitsmoduls 36 bzw. 38 durchzuführen. Selbstverständlich können an beiden Arbeitsmodulträger-Befestigungsbereichen 24, 26 auch Arbeitsmodule gleicher Bauart angeordnet werden.

Eine weitere Ausgestaltungsart eines bei der modular aufgebauten Arbeitsstation einsetzbaren Arbeitsmoduls könnte einen am Arbeitsmodul-Befestigungsbereich feststehend getragenen Arbeitsträger umfassen, also einen Arbeitsträger, welchem kein Arbeitsträgerantrieb zugeordnet ist und der letztendlich nur eine im Wesentlichen starre Anbindung einer Werkstückträgerbaugruppe an ein derartiges Arbeitsmodul bzw. den Arbeitsmodulträger ermöglicht. Eine derartige Ausgestaltung kann insbesondere dann Anwendung finden, wenn für die geeignete Durchführung eines Arbeitsvorgangs, beispielsweise zum Verschweißen von Komponenten einer Abgasanlage, eine Bewegung der die zu bearbeitenden Werkstücke tragenden Werkstückträgerbaugruppe nicht erforderlich ist.

## Patentansprüche

1. Modular aufgebaute Arbeitsstation, umfassend:
- einen Arbeitsmodulträger (18) mit wenigstens einem Arbeitsmodulträger-Befestigungsbereich (24, 26) zur Festlegung eines Arbeitsmoduls (36, 38) an dem Arbeitsmodulträger (18),
- eine Mehrzahl von Arbeitsmodulen (36, 38) mit einem Arbeitsmodul-Befestigungsbereich (42, 70) zur lösbaren Festlegung an einem Arbeitsmodulträger-Befestigungsbereich (24, 26) des Arbeitsmodulträgers (18), wobei wenigstens eines der Arbeitsmodule (36, 38) einen in wenigstens einem Bewegungsmodus bewegbaren Arbeitsträger (48, 48') und einen Arbeitsträgerantrieb (50, 50') zum Antreiben des Arbeitsträgers (48, 48') zur Bewegung in dem wenigstens einen Bewegungsmodus umfasst,
**dadurch gekennzeichnet dass** wenigstens eines der Arbeitsmodule (36, 38) ein Zweiachs-Arbeitsmodul (68) ist, wobei der Arbeitsträger (48') des Zweiachs-Arbeitsmoduls (68) um eine Drehachse (D') drehbar ist und um eine Schwenkachse (S) schwenkbar ist, und wobei der Arbeitsträgerantrieb (50') des Zweiachs-Arbeitsmoduls (68) einen Drehantrieb (53') zum Antreiben des Arbeitsträgers (48) zur Drehung um die Drehachse (D') umfasst und einen Schwenkantrieb (82) zum Antreiben des Arbeitsträgers (48') zum Schwenken um die Schwenkachse (S) umfasst, wobei das Zweichs-Arbeitsmodul (68) eine Dreh-Baugruppe (76) umfasst, wobei die Dreh-Baugruppe (76) den Drehantrieb (53') und den Arbeitsträger (48') umfasst, wobei das Zweiachs-Arbeitsmodul (68) eine Schwenk-Baugruppe (80) umfasst, wobei die Schwenk-Baugruppe (80) den Arbeitsmodul-Befestigungsbereich (70) und den Schwenkantrieb (82) umfasst, und dass die Dreh-Baugruppe (76) an der Schwenk-Baugruppe (80) durch den Schwenkantrieb (82) zum Schwenken um die Schwenkachse (S) schwenkbar getragen ist.

2. Arbeitsstation nach Anspruch 1, **dadurch gekennzeichnet, dass** an dem Arbeitsmodulträger (18) wenigstens zwei Arbeitsmodulträger-Befestigungsbereiche (24, 26) zur Festlegung jeweils eines Arbeitsmoduls (36, 38) vorgesehen sind.

3. Arbeitsstation nach Anspruch 2, **dadurch gekennzeichnet, dass** wenigstens zwei Arbeitsmodulträger-Befestigungsbereiche (24, 26) an zueinander entgegengesetzten Seiten (20, 22) des Arbeitsmodulträgers (18) vorgesehen sind, oder/und dass wenigstens zwei Arbeitsmodulträger-Befestigungsbereiche (24, 26) zueinander im Wesentlichen identisch sind.

4. Arbeitsstation nach einem der Ansprüche 1-3, **dadurch gekennzeichnet, dass** wenigstens eines der Arbeitsmodule (36, 36) ein Einachs-Arbeitsmodul (40) ist, wobei der Arbeitsträger (48) des Einachs-Arbeitsmoduls (40) um eine Drehachse (D) drehbar ist und der Arbeitsträgerantrieb (50) des Einachs-Arbeitsmoduls (40) einen Drehantrieb (53) zum Antreiben des Arbeitsträgers (48) zur Drehung um die Drehachse (D) umfasst.

5. Arbeitsstation nach Anspruch 4, **dadurch gekennzeichnet, dass** der Drehantrieb (53) einen vorzugsweise elektrisch betreibbaren Drehantriebsmotor umfasst.

6. Arbeitsstation nach einem der Ansprüche 1-5, **dadurch gekennzeichnet, dass** der Drehantrieb (53') einen vorzugsweise elektrisch betreibbaren Drehantriebsmotor umfasst, oder/und dass der Schwenkantrieb (82) einen vorzugsweise elektrisch betreibbaren Schwenkantriebsmotor umfasst.

7. Arbeitsstation nach einem der Ansprüche 1-6, **dadurch gekennzeichnet, dass** die Schwenkachse (S) zur Drehachse (D') nicht parallel ist, oder/und dass die Schwenkachse (S) die Drehachse (D') schneidet, vorzugsweise unter einem Winkel von etwa 90°.

8. Arbeitsstation nach einem der Ansprüche 1-7, **dadurch gekennzeichnet, dass** alle Arbeitsmodule (36, 38) zueinander im Wesentlichen identische Arbeitsmodul-Befestigungsbereiche (42, 70) aufweisen.

9. Arbeitsstation nach einem der Ansprüche 1-8, **dadurch gekennzeichnet, dass** in Zuordnung zu wenigstens einem Arbeitsmodulträger-Befestigungsbereich (24, 26) eine Gegenlagereinheit (56, 84) vorgesehen ist.

10. Arbeitsstation nach Anspruch 9, **dadurch gekennzeichnet, dass** die Gegenlagereinheit (56, 84) einen um eine Gegenlager-Drehachse (G, G') drehbaren Gegenlagerträger (60, 88) aufweist, wobei die Gegenlager-Drehachse (G, G') der wenigstens einen Gegenlagereinheit (56, 84) bei an dem dieser zugeordneten Arbeitsmodulträger-Befestigungsbereich (24, 26) festgelegtem Arbeitsmodul (36, 38) der Drehachse (D, D') dieses Arbeitsmoduls (36, 38) entspricht.

11. Arbeitsstation nach Anspruch 9 oder 10, **dadurch gekennzeichnet, dass** wenigstens eine in Zuordnung zu einem Arbeitsmodulträger-Befestigungsbereich (26) vorgesehene Gegenlagereinheit (84) vorzugsweise in Richtung der Gegenlager-Drehachse (G') bezüglich des zugeordneten Arbeitsmodulträger-Befestigungsbereichs (26) bewegbar ist.

12. Arbeitsstation nach einem der Ansprüche 1-11, **gekennzeichnet durch** wenigstens eine Werkstückträgerbaugruppe (14, 16), wobei die wenigstens eine Werkstückträgerbaugruppe (14, 16) einen ersten Befestigungsbereich (54, 54') zur Halterung an einem Arbeitsträger (48, 48') und einen Werkstückaufnahmebereich (55) zur Aufnahme wenigstens eines Werkstücks (W) umfasst.

13. Arbeitsstation nach Anspruch 12 und Anspruch 9, 10 oder 11, **dadurch gekennzeichnet, dass** wenigstens eine Werkstückträgerbaugruppe (14, 16) einen zweiten Befestigungsbereich (66, 66') zur Halterung an einer Gegenlagereinheit (56, 84) umfasst.

14. Arbeitsstation nach Anspruch 13, **dadurch gekennzeichnet, dass** wenigstens eine einen ersten Befestigungsbereich (54') und einen zweiten Befestigungsbereich (66') umfassende Werkstückträgerbaugruppe (16) einen den ersten Befestigungsbereich (54') aufweisenden ersten Baugruppenteil (90) und einen mit dem ersten Baugruppenteil (92) lösbar zu verbindenden und den zweiten Befestigungsbereich (66') bereitstellenden zweiten Baugruppenteil (92) umfasst.

## Claims

1. A modular workstation comprising:
- a work module support (18) having at least one work module support fastening region (24, 26) for fixing a work module (36, 38) to the work module support (18),
- a plurality of work modules (36, 38) having a work module fastening region (42, 70) for detachable fixing to a work module support fastening region (24, 26) of the work module support (18), wherein at least one of the work modules (36, 38) comprises a work carrier (48, 48') movable in at least one movement mode and a work carrier drive (50, 50') for driving the work carrier (48, 48') for movement in the at least one movement mode,
**characterized in that**
at least one of the work modules (36, 38) is a two-axis work module (68), wherein the work carrier (48') of the two-axis work module (68) can be rotated about an axis of rotation (D') and can be pivoted about a pivot axis (S), and wherein the work carrier drive (50') of the two-axis work module (68) comprises a rotary drive (53') for driving the work carrier (48) in rotation about the axis of rotation (D') and a pivot drive (82) for driving the work carrier (48') to pivot about the pivot axis (S), wherein the two-axis work module (68) comprises a rotary subassembly (76), wherein the rotary subassembly (76) comprises the rotary drive (53') and the work carrier (48'), wherein the two-axis work module (68) comprises a pivoting subassembly (80), wherein the pivoting subassembly (80) comprises the work module fastening region (70) and the pivot drive (82), and wherein the rotary subassembly (76) is supported pivotably on the pivoting subassembly (80) by the pivot drive (82) for pivoting about the pivot axis (S).

2. The workstation as claimed in claim 1, **characterized in that** at least two work module support fastening regions (24, 26) for fixing in each case one work module (36, 38) are provided on the work module support (18).

3. The workstation as claimed in claim 2, **characterized in that** at least two work module support fastening regions (24, 26) are provided on mutually opposite sides (20, 22) of the work module support (18), or/and **in that** at least two work module support fastening regions (24, 26) are substantially identical to one another.

4. The workstation as claimed in any of claims 1-3, **characterized in that** at least one of the work modules (36, 36) is a single-axis work module (40), wherein the work carrier (48) of the single-axis work module (40) can be rotated about an axis of rotation (D), and the work carrier drive (50) of the single-axis work module (40) comprises a rotary drive (53) for driving the work carrier (48) in rotation about the axis of rotation (D).

5. The workstation as claimed in claim 4, **characterized in that** the rotary drive (53) comprises a rotary drive motor, which can preferably be operated electrically.

6. The workstation as claimed in any of claims 1 to 5, **characterized in that** the rotary drive (53') comprises a rotary drive motor, which can preferably be operated electrically, or/and **in that** the pivot drive (82) comprises a pivot drive motor, which can preferably be operated electrically.

7. The workstation as claimed in any of claims 1 to 6, **characterized in that** the pivot axis (S) is not parallel to the axis of rotation (D'), or/and **in that** the pivot axis (S) intersects the axis of rotation (D'), preferably at an angle of about 90°.

8. The workstation as claimed in any of claims 1 to 7, **characterized in that** all the work modules (36, 38) have substantially identical work module fastening regions (42, 70).

9. The workstation as claimed in any of claims 1 to 8, **characterized in that** a counterbearing unit (56, 84) is provided in association with at least one work module support fastening region (24, 26).

10. The workstation as claimed in claim 9, **characterized in that** the counterbearing unit (56, 84) has a counterbearing support (60, 88), which can be rotated about a counterbearing axis of rotation (G, G'), wherein the counterbearing axis of rotation (G, G') of the at least one counterbearing unit (56, 84) corresponds to the axis of rotation (D, D') of the work module (36, 38) when this work module (36, 38) is fixed to the work module support fastening region (24, 26) assigned to it.

11. The workstation as claimed in claim 9 or 10, **characterized in that** at least one counterbearing unit (84) provided in association with a work module support fastening region (26) can be moved preferably in the direction of the counterbearing axis of rotation (G') with respect to the associated work module support fastening region (26).

12. The workstation as claimed in any of claims 1 to 11, **characterized by** at least one workpiece carrier subassembly (14, 16), wherein the at least one workpiece carrier subassembly (14, 16) comprises a first fastening region (54, 54') for mounting on a work carrier (48, 48') and a workpiece receiving region (55) for receiving at least one workpiece (W).

13. The workstation as claimed in claim 12 and claim 9, 10 or 11, **characterized in that** at least one workpiece carrier subassembly (14, 16) comprises a second fastening region (66, 66') for mounting on a counterbearing unit (56, 84).

14. The workstation as claimed in claim 13, **characterized in that** at least one workpiece carrier subassembly (16), which comprises a first fastening region (54') and a second fastening region (66'), comprises a first subassembly part (90), which has the first fastening region (54'), and a second subassembly part (92), which is to be connected detachably to the first subassembly part (92) and provides the second fastening region (66').

## Revendications

1. Un poste de travail modulaire comprenant :
- un support de module de travail (18) comportant au moins une zone de fixation de support de module de travail (24, 26) pour fixer un module de travail (36, 38) au support de module de travail (18),
- une pluralité de modules de travail (36, 38) avec une zone de fixation de module de travail (42, 70) pour une fixation amovible à une zone de fixation de support de module de travail (24, 26) du support de module de travail (18), dans lequel au moins l'un des modules de travail (36, 38) comprend un support de travail (48, 48') mobile dans au moins un mode de mouvement et un entraînement de support de travail (50, 50') pour entraîner le support de travail (48, 48') pour le déplacer dans ledit au moins un mode de mouvement,
**caractérisé en ce que**
- au moins l'un des modules de travail (36, 38) est un module de travail à deux axes (68), dans lequel le support de travail (48') du module de travail à deux axes (68) peut être tourné autour d'un axe de rotation (D') et peut être pivoté autour d'un axe de pivotement (S), et dans lequel l'entraînement de support de travail (50') du module de travail à deux axes (68) comprend un entraînement rotatif (53') pour entraîner le support de travail (48) en rotation autour de l'axe de rotation (D') et un entraînement pivotant (82) pour entraîner le support de travail (48') en pivotement autour de l'axe de pivotement (S), dans lequel le module de travail à deux axes (68) comprend un sous-ensemble rotatif (76), dans lequel le sous-ensemble rotatif (76) comprend l'entraînement rotatif (53') et le support de travail (48'), dans lequel le module de travail à deux axes (68) comprend un sous-ensemble pivotant (80), dans lequel le sous-ensemble pivotant (80) comprend la zone de fixation de module de travail (70) et l'entraînement pivotant (82), et dans lequel le sous-ensemble rotatif (76) est supporté de manière pivotante sur le sous-ensemble pivotant (80) par l'entraînement pivotant (82) pour pivoter autour de l'axe de pivotement (S).

2. Le poste de travail selon la revendication 1, **caractérisé en ce qu'**au moins deux zones de fixation de support de module de travail (24, 26) pour fixer respectivement un module de travail (36, 38) sont prévues sur le support de module de travail (18).

3. Le poste de travail selon la revendication 2, **caractérisé en ce qu'**au moins zones de fixation de support de module de travail (24, 26) sont prévues sur des côtés opposés (20, 22) du support de modules de travail (18), et/ou **en ce qu'**au moins deux zones de fixation de support de module de travail (24, 26) sont sensiblement identiques l'une à l'autre.

4. Le poste de travail selon l'une quelconque des revendications 1 à 3, **caractérisé en ce qu'**au moins l'un des modules de travail (36, 36) est un module de travail à un seul axe (40), dans lequel le support de travail (48) du module de travail à un seul axe (40) peut être tourné autour d'un axe de rotation (D), et l'entraînement de support de travail (50) du module de travail à un seul axe (40) comprend un entraînement rotatif (53) pour entraîner le support de travail (48) en rotation autour de l'axe de rotation (D).

5. Le poste de travail selon la revendication 4, **caractérisée en ce que** l'entraînement rotatif (53) comprend un moteur d'entraînement rotatif, qui peut de préférence être actionné électriquement.

6. Le poste de travail selon l'une quelconque des revendications 1 à 5, **caractérisé en ce que** l'entraînement rotatif (53') comprend un moteur d'entraînement rotatif, qui peut de préférence être actionné électriquement, et/ou **en ce que** l'entraînement pivotant (82) comprend un moteur d'entraînement pivotant, qui peut de préférence être actionné électriquement.

7. Le poste de travail selon l'une quelconque des revendications 1 à 6, **caractérisée en ce que** l'axe de pivotement (S) n'est pas parallèle à l'axe de rotation (D'), ou/et **en ce que** l'axe de pivotement (S) croise l'axe de rotation (D'), de préférence à un angle d'environ 90°.

8. Le poste de travail selon l'une quelconque des revendications 1 à 7, **caractérisé en ce que** tous les modules de travail (36, 38) présentent des zones de fixation de module de travail (42, 70) sensiblement identiques.

9. Le poste de travail selon l'une quelconque des revendications 1 à 8, **caractérisé en ce qu'**une unité de contrepartie (56, 84) est prévue en association avec au moins une zone de fixation de support de module de travail (24, 26).

10. Le poste de travail selon la revendication 9, **caractérisé en ce que** l'unité de contrepartie (56, 84) comporte un support de contrepartie (60, 88) qui peut tourner autour d'un axe de rotation de contrepartie (G, G'), dans lequel l'axe de rotation de contrepartie (G, G') de ladite au moins une unité de contrepartie (56, 84) correspond à l'axe de rotation (D, D') du module de travail (36, 38) lorsque ce module de travail (36, 38) est fixé à la zone de fixation de support de module de travail (24, 26) qui lui est attribuée.

11. Le poste de travail selon la revendication 9 ou 10, **caractérisé en ce qu'**au moins une unité de contrepartie (84) prévue en association avec une zone de fixation de support de module de travail (26) peut être déplacée de préférence dans la direction de l'axe de rotation de contrepartie (G') par rapport à la zone de fixation de support de module de travail (26) associée.

12. Le poste de travail selon l'une quelconque des revendications 1 à 11, **caractérisée par** au moins un sous-ensemble porte-pièce (14, 16), dans lequel ledit au moins un sous-ensemble porte-pièce (14, 16) comprend une première zone de fixation (54, 54') pour le montage sur un porte-pièce (48, 48') et une zone de réception de pièce (55) pour recevoir au moins une pièce (W).

13. Le poste de travail selon la revendication 12 et la revendication 9, 10 ou 11, **caractérisé en ce qu'**au moins un sous-ensemble porte-pièce (14, 16) comprend une deuxième zone de fixation (66, 66') destinée à être montée sur une unité de contrepartie (56, 84).

14. Le poste de travail selon la revendication 13, **caractérisée en ce qu'**au moins un sous-ensemble porte-pièce (16), qui comprend une première zone de fixation (54') et une deuxième zone de fixation (66'), comprend une première partie de sous-ensemble (90), qui comporte la première zone de fixation (54'), et une deuxième partie de sous-ensemble (92) qui doit être reliée de manière amovible à la première partie de sous-ensemble (92) et qui fournit la deuxième zone de fixation (66').
